# EUROPEAN PATENT APPLICATION

(11) **EP 2 562 621 A2**
(43) Date of publication of application: **27.02.2013**
(21) Application number: 11188945.7
(22) Date of filing: 14.11.2011
(51) Int. Cl.: G06F 3/023

(54) **Method for programming output value of key**

(30) Priority: 23.08.2011 TW 100130073
(71) Applicant: Askey Technology (Jiangsu) Ltd., Economic-Technological Development Area Wujiang Jiangsu (CN); Askey Computer Corp., New Taipei City 235 (TW)
(72) Inventor: Wang, Nung-Chao, Kaohsiung City 807 (TW); Hsieh, Ching-Feng, Taipei City 108 (TW)
(74) Representative: Bonvicini, Davide

(57) **Abstract**

A method for programming output value of a key is applicable to an electronic device having at least a key. Therein, a first output value can be generated when the press key is triggered. The method includes the steps of: setting a second output value for the key; creating and storing a first corresponding table between the first output value and the second output value such that the second output value is obtained from the first corresponding table based on the first output value generated by triggering the key; and converting the second output value into a corresponding key value according to a second corresponding table between output values and key values preloaded in the electronic device.

## Description

### BACKGROUND OF THE INVENTION

### 1. Field of the Invention

The present invention relates to methods for programming keys, and, more particularly, to a method for programming output value of a key.

### 2. Description of Related Art

Along with the development of technologies, portable electronic devices have advanced from mobile phonesand notebook computers to smart phones, personal digital assistants, ebook readers, subnotes, tablet computers and so on. In addition to being compact in size, the portable devices are gradually equipped with virtual keyboards instead of physical ones.

The virtual keyboard is an application of a touch screen so as to allow a user to do touch-typing thereon. Through preset programs, a touch feedback system of the touch screen can be activated to drive connected devices, thereby eliminating the need of a conventional mechanical keyboard. However, for the smart phone or the tablet computer, not all keys can be omitted. For example, a power key is necessary for turning on/off the smart phone or the tablet computer.

Further, the smart phone or the tablet personal computer usually includes some other physical keys, for example, a menu key, a home key, a return key or a volume key so as to facilitate the user's operation. However, the functions of the physical keys cannot be changed or extended by the user according to the user's preference.

Furthermore, although some touch-type mobile phones or computers include shortcut keys that allow the user to speedily call specific applications, the functions of the shortcut keys cannot be changed by changing corresponding key values of the shortcut keys. For example, a key preset for a shutter button of camera cannot be changed into a return key.

### SUMMARY OF THE INVENTION

Accordingly, the present invention provides a method for programming output value of a key applicable to an electronic device in which a first output value is generated by triggering the key and converted into a second output value.

In order to achieve the above and other objects, the method comprises the steps of: (1) setting a second output value for the key; (2) creating a first corresponding table between the first output value and the second output value; and (3) obtaining the second output value from the first corresponding table based on the first output value generated by triggering the key.

By setting the second output value and creating the first corresponding table between the first output value and the second output value so as to convert the first output value into the second output value according to the first corresponding table, the present invention allows the user to arbitrarily set the output value of the key no matter it is a physical one or a virtual one, thereby changing the function of the key and facilitating the operation.

Further, step (2) can comprise storing the first corresponding table in a memory such that at step (3), the second output value is obtained from the first corresponding table stored in the memory based on the first output value. Furthermore, the memory can be a non-volatile memory such that when the electronic device is restarted, the second output value is obtained from the first corresponding table in the non-volatile memory based on the first output value at step (3).

In addition, a second corresponding table between output values and key values can be preloaded in the electronic device, and the first output value and the second output value can be included in the output values of the second corresponding table such that the second output value can be converted into a corresponding key value according to the second corresponding table.

By setting the output value of the key of the electronic device, the present invention can accelerate the operation or key input speed. In addition, the present invention can extend the function of the key through combination of the key with other keys.

### BRIEF DESCRIPTION OF DRAWINGS

FIG 1A is a basic flow diagram of a method for programming output value of a key according to the present invention;
FIG 1B is a flow diagram of the method according to an embodiment of the present invention; and
FIG 2 is a schematic diagram of an electronic device according to an application example of the method of the present invention.

### DETAILED DESCRIPTION OF PREFERRED EMBODIMENTS

The following illustrative embodiments are provided to illustrate the disclosure of the present invention, these and other advantages and effects can be apparent to those in the art after reading this specification.

The method for programming output value of a key is applicable to an electronic device having at least a key. The electronic device can be such as a tablet personal computer or a mobile phone, and the key can be a physical key or a virtual key. The number of keys is not limited.

The operation system of the electronic device can be Android, which has a kernel space and a user space. When a physical key is triggered by pressing or a virtual key is triggered by touching, a first output value is outputted from a driver program in the kernel space to the user space, and is further converted into a key value by a framework in the user space according to a first corresponding table between key values and output values, thereby causing the function corresponding to the key value to be performed. The above-described process describes operation of the electronic device before the key is set by the user.

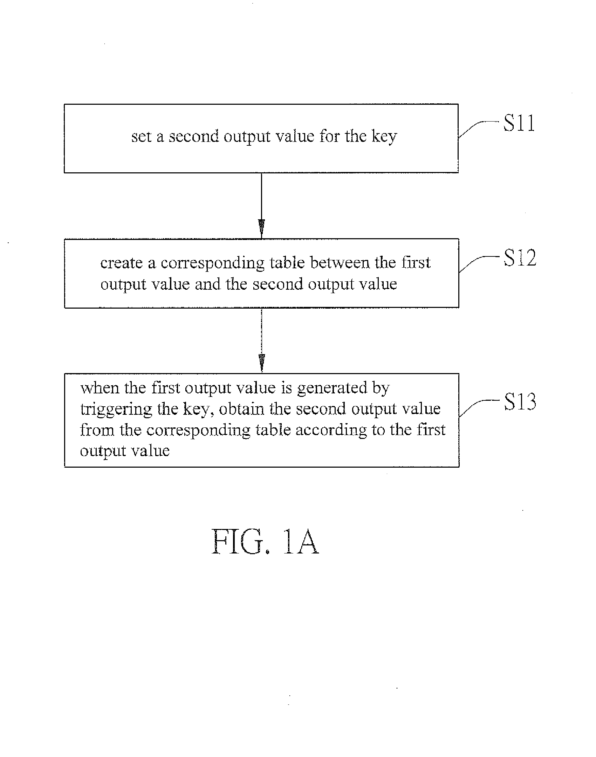

The method for programming output value of a key according to the present invention includes steps S11 to S13, as shown in FIG 1A.

At step S11, a second output (scan code) value is set for the key. In particular, an interface is provided by the user space of the electronic device so as for the user to set the second output (scan code) value for the key, thereby changing the function of the key. In principle, all physical keys can be set. But in practice, the user is only allowed to set a specific number of physical keys. Then, the process goes to step S12.

At step S12, a first corresponding table between the first output (key code) value and the second output (scan code) value is created. Step S12 can further comprise storing the first corresponding table in a memory. In particular, a library is created in the framework of the user space, and used for setting a second output (scan code) value for the key and creating and storing the first corresponding table between the first and second output values in a file in the kernel space. Therein, the file is stored in a memory. Then, the process goes to step S 13.

At step S13, when the first output value is generated by triggering of the key, the second output value is obtained from the first corresponding table according to the first output value. In particular, when the key is triggered, the second output value is obtained from the first corresponding table stored in the file of the memory of the kernel space according to the first output value.

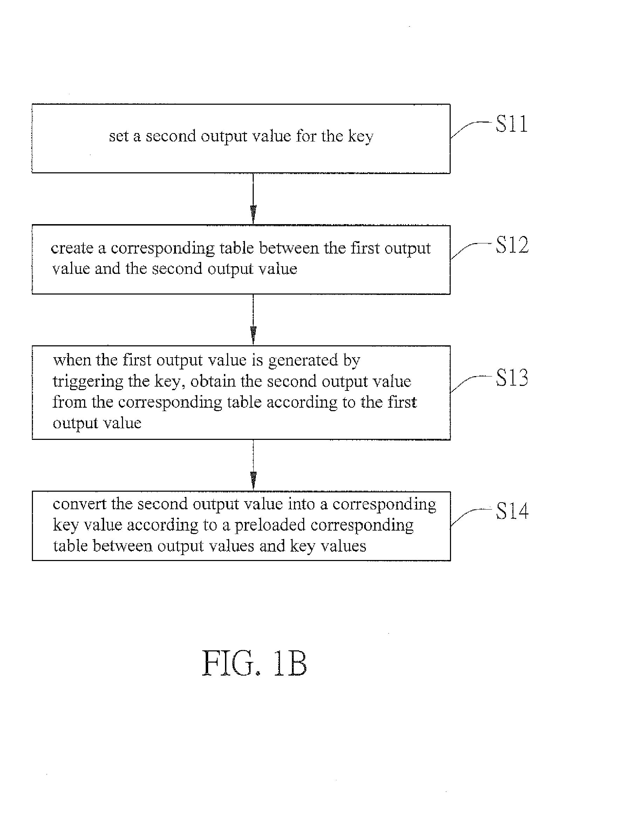

Referring to FIG 1B, the process can further go to step S14. At step S14, according to a second corresponding table between output values and key values of the electronic device, the second output value is converted into a corresponding key value so as to cause the function corresponding to the key value to be performed. Therein, both the first output value and the second output value are included in the output value of the second corresponding table between output values and key values. Therefore, a corresponding key value can be obtained according to the first output value or the second output value.

Further, at step S12, the first corresponding table between the first output value and the second output value can be stored in a property file which is stored in a non-volatile memory. As such, when the electronic device is restarted, the second output value corresponding to the first output value can be obtained from the first corresponding table of the property file in the non-volatile memory.

In practice, the electronic device has Android preloaded therein, and the second corresponding table between output values (i.e. scan codes) and key values (i.e. key codes) is preloaded in the electronic device before initialization of Android. Furthermore, system files are created in the kernel space with the number of the system files being the same as the number of keys of the electronic device, and the library is created in the framework of the user space.

Further, an interface is provided for the user to set the key code of at least one key. Thereafter, the scan code corresponding to the key code is obtained by the library in the second corresponding table between scan codes and key codes. Subsequently, the library sets the obtained scan code in the system file corresponding to the key in the kernel space such that when the key is triggered, the preset scan code is read by the library from the system file corresponding to the key and further transmitted by the driver program in the kernel space to the user space. Moreover, the key code set by the user can be stored in a property file in a non-volatile memory such that when the electronic device is restarted, the key code set before can be obtained from the property file and then the scan code corresponding to the key code can be set in the system file and transmitted by the driver program to the user space.

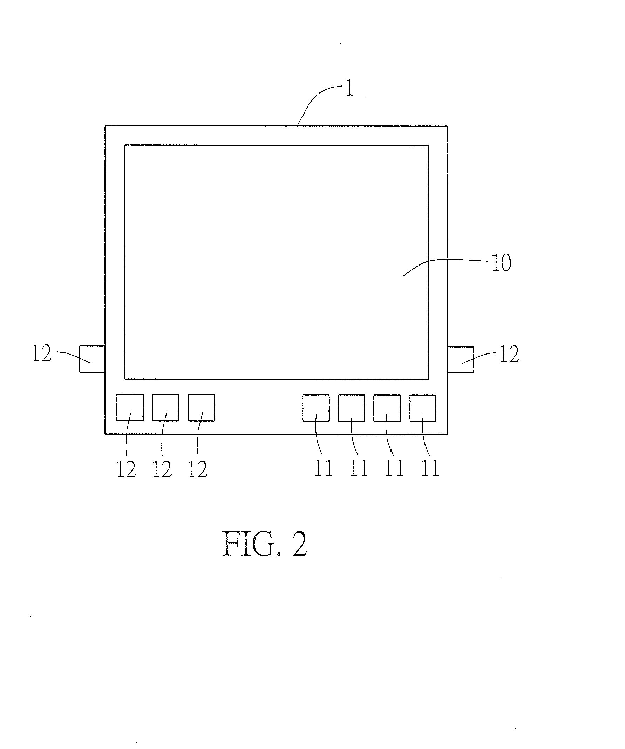

Referring to FIG 2, the method of the present invention is applied to an electronic device 1 having a touch screen 10 and a fixed number of keys 11. Also, the electronic device 1 has a specific number of keys 12 that can be set by the user. Referring to FIG 2, five keys 12 are provided. Three of the keys 12 are disposed at the bottom of the touch screen 10, and the other two of the keys 12 are disposed at opposite sides of the touch screen 10. It is noteworthy that the number of the keys 12 and keys 11 and the type of the electronic device 1 are only for illustrative purposes and not intended to limit the present invention.

Through the above-described method for programming output value of a key, the present invention accelerates the input speed. For example, by using two of the keys 12 defined as a return key and an enter key, respectively, the user can quickly delete characters and input messages without the need to look for the return key and the enter key on the touch screen 10. Further, to accelerate the operation speed, the user can define one of the keys 12 as a search key for searching web pages or a camera key for starting camera, thereby quickly calling the search application or camera application of the system. In addition, since Android supports quick launch application, by holding down one of the keys defined as a search key and pressing another key defined as a character key, the user can quickly call a corresponding application defined in the quick launch application. Moreover, the function of the keys can be extended. For example, Android has a key value for supporting a joystick. When the output value of a key is set to correspond to the key value for supporting the joystick, the function of the key is extended.

Therefore, the method of the present invention allows the user to set the output value of a key and further converts the output value into a corresponding key value so as to cause the function corresponding to the key value to be performed, thereby accelerating the operation or key input speed or extending the function of the key.

The above-described descriptions of the detailed embodiments are only to illustrate the preferred implementation according to the present invention, and it is not to limit the scope of the present invention. Accordingly, all modifications and variations completed by those with ordinary skill in the art should fall within the scope of present invention defined by the appended claims.

## Claims

1. A method for programming output value of a key applicable to an electronic device in which a first output value is generated when the key is triggered, the method comprising the steps of:
(1) setting a second output value for the key;
(2) creating a first corresponding table between the first output value and the second output value; and
(3)obtaining the second output value from the first corresponding table based on the first output value generated by triggering the key.

2. The method of claim 1, wherein step (2) further comprises storing the first corresponding table stored in a memory such that at step (3) the second output value is obtained from the corresponding table in the memory based on the first output value.

3. The method of claim 2, wherein in step (3) the memory is a non-volatile memory, and when the electronic device is restarted, the second output value is obtained from the first corresponding table in the non-volatile memory based on the first output value.

4. The method of claim 1, wherein a second corresponding table between output values and key values is preloaded in the electronic device, and the first output value and the second output value are included in the output values of the second corresponding table.

5. The method of claim 2, wherein a second corresponding table between output values and key values is preloaded in the electronic device, and the first output value and the second output value are included in the output values of the second corresponding table.

6. The method of claim 3, wherein a second corresponding table between output values and key values is preloaded in the electronic device, and the first output value and the second output value are included in the output values of the second corresponding table.

7. The method of claim 4, further comprising step (4) of converting the second output value into a corresponding key value according to the corresponding table between output values and key values.

8. The method of claim 1, wherein the key of the electronic device is a physical key or a virtual key.

9. The method of claim 1, wherein the operation system of the electronic device is Android.
